# EUROPEAN PATENT SPECIFICATION

(11) **EP 0 444 885 B1**
(45) Date of publication and mention of the grant of the patent: **06.05.1999**
(21) Application number: 91301553.3
(22) Date of filing: 26.02.1991
(51) Int. Cl.: G06F 3/06, G06F 11/10, G06F 12/02

(54) **A method for controlling a buffer memory for a magnetic disk storage system**
Verfahren zum Steuern eines Pufferspeichers für einen Magnetplattenspeicher
Méthode de commande d'une mémoire tampon pour un système de stockage à disques magnétiques

(30) Priority: 02.03.1990 US 487740
(43) Date of publication of application: 04.09.1991
(73) Proprietor: SEAGATE TECHNOLOGY INTERNATIONAL, Georgetown Grand Cayman Island (KY)
(72) Inventor: Desai, Dhiru N., San Jose, California 95120 (US); Lewis, David M., Santa Cruz, California 951060 (US)
(74) Representative: Kenyon, Sarah Elizabeth

(56) References cited:
- EP-A- 0 221 763
- EP-A- 0 226 950
- EP-A- 0 277 763
- GB-A- 2 193 017

## Description

This invention relates to a method for controlling buffer memories for magnetic disk storage systems.

Temporary storage devices such as dynamic random access memory (DRAM) devices are often used in connection with magnetic storage media as buffer memories for temporarily storing character information. Each character is represented, for example, by an 8-bit information word and 1-parity bit. Typically, information is read into a temporary storage memory device one character at a time using nine parallel data bit lines. DRAMs are typically available as 4- or 1-bit wide devices, so that storage of the extra parity bit associated with each information word is cumbersome, resulting in the parity bit not being stored or being stored in a separate memory device.

It is an object of the invention to provide a controller for and a method of controlling DRAM buffer memories for a magnetic disk storage system, which permits efficient use of standard low cost DRAM memories for storing information data and parity data in a variety of DRAM memory modes.

According to the present invention there is provided a method for temporarily storing and retrieving q-bit character information data for an information storage system in a y-bit wide buffer memory unit comprising a plurality of DRAMS, with q being greater than y, characterised by:
providing a virtual memory address for each item of q-bit character information data, said character information data being organised into a block comprising z said information characters;
translating the virtual memory addresses into corresponding addresses of memory locations in said buffer memory unit for storage of y-bit groups of said block in said buffer memory unit, said translating step including
selecting a row address for storage of said block,
selecting a base column address for said block, and
successively incrementing said base column address to provide additional column addresses for successive y-bit groups of said block;
transferring each of said y-bit groups of said block via a y-bit data bus to an address location in said buffer memory unit determined by said translating step;
providing a x-bit error detection code word for each said block;
selecting an address for storing said x-bit error detection code word in said buffer memory unit; said selecting an address including:
selecting an error detection code word row address;
selecting an error detection code word base column address for a first y-bit group of said x-bit error detection code word;
incrementing said error detection code word base column address by y to provide a second column address for a second y-bit group of said x-bit error detection code word; and
transferring said error detection code word via said y-bit data bus to the selected address locations for said x-bit error detection code word in said buffer memory unit.

In accordance with a preferred embodiment of the present invention, there is provided a method for temporarily storing and retrieving 8-bit character information data for a magnetic disk information storage system in a number of 4xn DRAM buffer memory configurations, characterised by the steps of: providing a virtual memory address for each item of 8-bit character information data, said character information data being organised into a 16-byte block, translating the virtual memory addresses into corresponding addresses of memory locations in said 4xn buffer memory for storage of 4-bit groups of said 16-byte block in said 4xn DRAM buffer memory, said translating step including: selecting a row address for storage of said 16-byte block, selecting a base column address for said 16-byte block, and successively incrementing said base column address to provide additional column addresses for successive 4-bit groups of said 16-byte block, and transferring each of said 4-bit groups of said 16-byte block through a 4-bit data bus to the various pre-determined address locations in one of said 4xn DRAM buffer memory configurations, where n is the size of the 4-bit wide DRAM, e.g. n=32Kb, n=64Kb, n=256Kb, etc, determined by said translating step.

Advantageously, an error detection code word in the form of an 8-bit parity word is provided for the 16-byte block and is stored by selecting a parity word row address, selecting a parity word base column address for a first 4-bit group of said 8-bit parity word, and incrementing said parity word column address to provide a second column address for a second 4-bit group of said 8-bit parity word. The error detection code word is then transferred through the 4-bit data bus to the various pre-determined address locations in the 4xn buffer memory for said 8-bit parity word.

The translating step may include selecting row and column addresses using multiplexer circuits. The method may further include the step of latching the row and column addresses into latch circuits, the incrementing step including the step of feeding the outputs of the latch circuits through multiplexing circuits connected to the inputs of the latch circuits to increment the column addresses.

Optionally, the 4xn buffer memory may comprise a DRAM operating in a page mode or in a static column mode.

A further object of the invention is solved by the features of claim 10.

The invention is described further, by way of example, with reference to the accompanying drawings, in which:-
Figure 1 is an overall functional block diagram of an integrated circuit SCSI controller which includes a DRAM interface circuit for communicating with a DRAM buffer memory over a 4-bit data line;
Figure 2 is a block diagram of a buffer memory control portion of the SCSI controller;
Figure 3 is a block diagram of the buffer memory control portion showing the interfaces required to transfer data from a disk memory to a host computer;
Figure 4 is a block diagram showing storage of character information data and parity data in the buffer memory when data is written from a host computer to a disk memory;
Figure 5 is a timing diagram for a normal page-mode block transfer of data between the controller and a DRAM buffer memory;
Figure 6 is a timing diagram for a static-column-mode block transfer of data between the controller and a DRAM buffer memory;
Figure 7 is a timing diagram for an inter-leaved page-mode block transfer of data between the controller and a DRAM buffer memory;
Figure 8 is a block diagram of the DRAM interface circuit of the controller;
Figure 9 is a circuit diagram of a state machine portion of the DRAM interface circuit; and
Figure 10 is a circuit diagram of an address sequencer portion of the DRAM interface circuit.

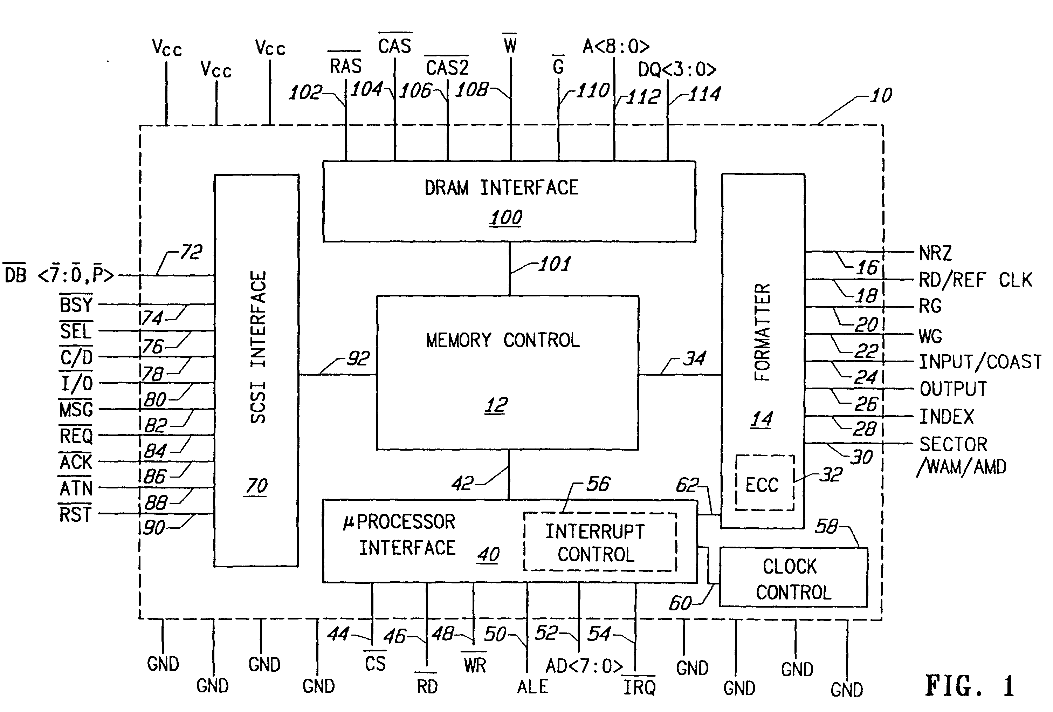

Figure 1 shows a block diagram of a 68-pin integrated circuit small computer system interface (SCSI) controller circuit 10. As shown in the diagram, various interfaces are connected by signal buses to a memory control unit 12. A formatter 14 provides an interface to a magnetic storage disk through various signal lines. An NRZ signal on a line 16 is an input/output signal in an NRZ data format, which provides a data bit stream to or from the logic in the formatter 14. An RD/REF CLK signal on a line 18 is a read/reference clock, which is the clock signal for the formatter 14 supplied by a data separator of the magnetic disk electronics. The frequency of this clock signal ranges from 5 Mhz to 24 Mhz. A read gate signal RG on a signal line 20 is a signal which enables a read channel and causes the controller circuit 10 to input NRZ data from the magnetic disk. A write gate signal WG on a signal line 22 is a signal which enables write drivers and causes the controller circuit 10 to output NRZ data to the magnetic disk. An INPUT/COAST signal on a line 24 and an OUTPUT signal on a line 26 are general purpose signals used to synchronise the formatter 14 with external hardware. An INDEX signal on a line 28 is an index signal from the magnetic disk drive and is supplied once per revolution of the disk. A SECTOR/WAM/AMD signal on a line 30 is a sector input, address mark detected input, or write address mark output to or from the formatter 14, depending on the operating mode of the system. The formatter 14 also contains an error correction code circuit ECC 32. Signals passing between the memory control unit 12 and the formatter 14 are carried on a signal bus 34.

Communication between the memory control unit 12 and an external micro-processor, such as an 8051 Intel Controller, is handled with a micro-processor interface circuit 40, which communicates with the memory control circuit 12 through a bus 42. An active low chip select signal CS on a signal line 44 enables the controller integrated circuit 10 for either a read or a write operation. An active low read data signal RD on a signal line 46 in conjunction with the CS signal causes data from a specified register within the memory control circuit 12 to be moved to a data bus AD provided by a bus 52, as indicated. The micro-processor address/data bus AD (7:0) is an input/output bus with active high signals provided on bi-directional signal lines, which interface with a multiplexed micro-processor address/data bus of the external micro-processor. An active low write data signal WR on a signal line 48 in connection with the CS signal causes data from the data bus AD to be moved to a specified register within the memory control unit 12. An interrupt request signal IRQ on a signal line 54 is an active low output signal from a micro-processor interface interrupt control circuit 56 to interrupt the external micro-processor. A clock control circuit 58 within the integrated circuit 10 provides appropriate clocks to a clock bus 60 to the micro-processor interface circuit 40. Signals from the micro-processor interface circuit 40 to the formatter 14 are provided on a bus 62.

An SCSI interface circuit 70 provides for communication on an SCSI bus 92 from a host computer to the memory control unit 12. Active low input/output signal lines DB (7:0) are the SCSI data lines. An active low input/output busy SCSI control signal BSY is provided on a signal line 74. An active low input/output SCSI SEL control signal is provided on a signal line 76. An active low input/output command/data SCSI control signal C/D is provided on a signal line 78. An active low input/output message SCSI control signal MSG is provided on a signal line 82. An active low input/output request signal REQ in connection with an active low input/output acknowledged signal ACK on a line 86 forms an SCSI data transfer hand shake. An active low input/output SCSI attention control signal ATN is provided on a signal line 88. An active low input/output SCSI re-set signal is provided on a signal line 90. All of the above SCSI control signals are provided in accordance with the SCSI standards. The SCSI interface circuit 70 is coupled to the memory control circuit 12 through the signal bus 92.

A DRAM interface circuit 100 for providing communication with a DRAM buffer memory is coupled to the memory control circuit 12 through a signal bus 101. External connections from the DRAM interface circuit 100 to the DRAM buffer memory are provided through various signal lines. An active low output row address strobe signal RAS on a signal line 102 provides an address strobe for the DRAM buffer memory. An active low input/output column address strobe signal CAS on a signal line 104 provides an address strobe for a first or an only DRAM. A second active low output column address strobe signal CAS2 on a signal line 106 provides an address strobe for a second DRAM. An active low output write strobe signal W is provided on a signal line 108. An active low output enable signal G on a signal line 110 is a DRAM output driver enable signal. An address bus 112 provides nine bits of DRAM address A (8:0). Active high input/output signals are provided on a DRAM data bus DQ (3:0).

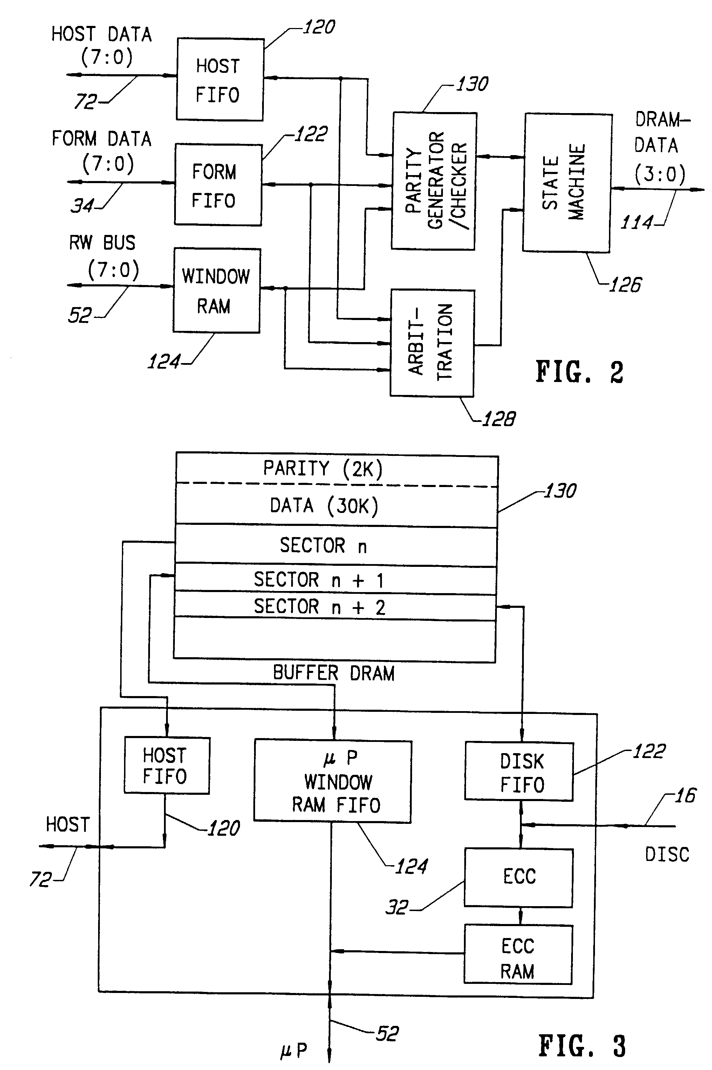

Figure 2 shows diagrammatically the interface circuits for the integrated circuit 10. The data is transferred to and from the three buses 72, 34, 52 and the DRAM data bus 114. Data from the SCSI data bus 72, that is host data, is input to a host FIFO 120. Formatted data from the formatter 14 is input to a format FIFO 122. Read/write data from the microprocessor on the bus 52 is input to a window RAM 124. Byte/wide data transfers to and from each of these asynchronous interfaces are made to the respective FIFOs. Nibble/wide transfers are made to and from the DRAM between the respective FIFOs under the control of a state machine 126.

Several different DRAM configurations can be implemented, which include: one 4 x 64K DRAM page mode or static column mode; two 4 x 64K DRAMs; one 4 x 256K DRAM page mode or static column mode; and two 4 x 256K DRAMs. The circuit also provides two nibbles of parity for each thirty two nibble transfer. Transfers to and from the DRAM are in blocks of thirty two nibbles, or 16-bytes. An arbitration circuit 128 gives priority for each interface operation with the DRAM. The disk sequencer for the magnetic disk which provides formatted data from the format FIFO 122 has the highest priority. Refresh of the DRAM buffer memory has the next highest priority. Data from the micro-processor from the read/write bus, which is stored in the window ram 124, has the next highest priority. Finally, host data on the SCSI bus 72 stored in the host FIFO 120 has the lowest priority. The arbitration circuit 128 arbitrates at the end of each 16-byte transfer and allows only one interface access to the DRAM at a time. A parity generator/checker circuit 130 provides the two nibbles of parity for each thirty two nibble transfer.

Figure 3 is a block diagram of the buffer memory controller showing the interfaces required to transfer data from a disk memory to a host computer on the SCSI bus. The controller can handle three asynchronous interfaces to the DRAM buffer memory 130. Figure 3 diagrammatically shows various sectors of the DRAM buffer memory 130 being utilised. As the disk information is filling sector n+2 of the DRAM buffer memory 130 from the disk or format FIFO 122, the microprocessor can be correcting sector n+1, and the host computer connected to the SCSI bus 72 can be reading sector n through the host FIFO 120.

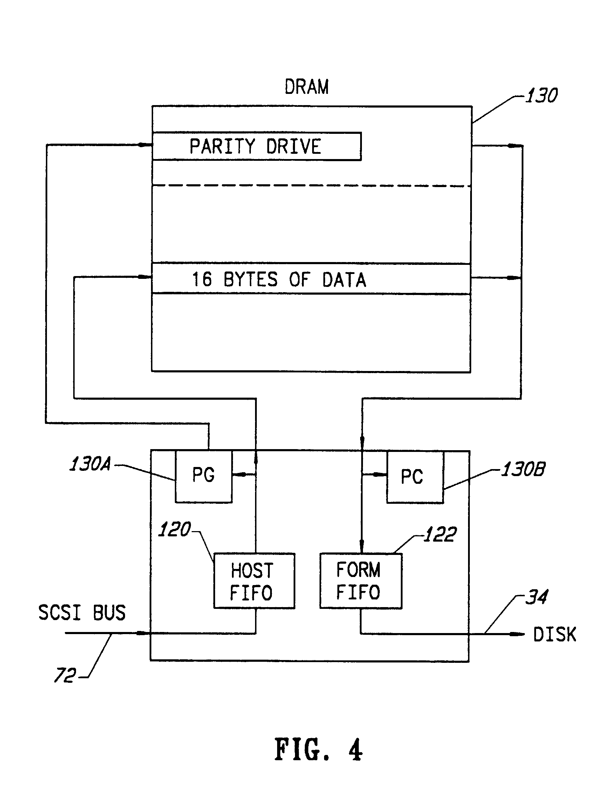

Figure 4 diagrammatically shows the storage character information data and parity data in the buffer memory when the data is being written from the SCSI bus 72 to the disk memory connected to the bus 34. Information from the host FIFO 120 is input to the DRAM in 16-byte blocks of data. Parity for that block is generated by the parity generator 130a and stored in the parity portion of the DRAM buffer memory 130. For read out, the data is read out from both the parity storage area and the information storage area of the DRAM buffer memory 130 to the form FIFO 122. Parity checking on the output data being read out from the DRAM buffer memory 130 is performed by the parity checker 130b. Parity is generated during the write mode and it is checked during the read mode. Parity is written in a separate place in the DRAM with 2K bytes of address space required for parity for every 32K bytes of total memory.

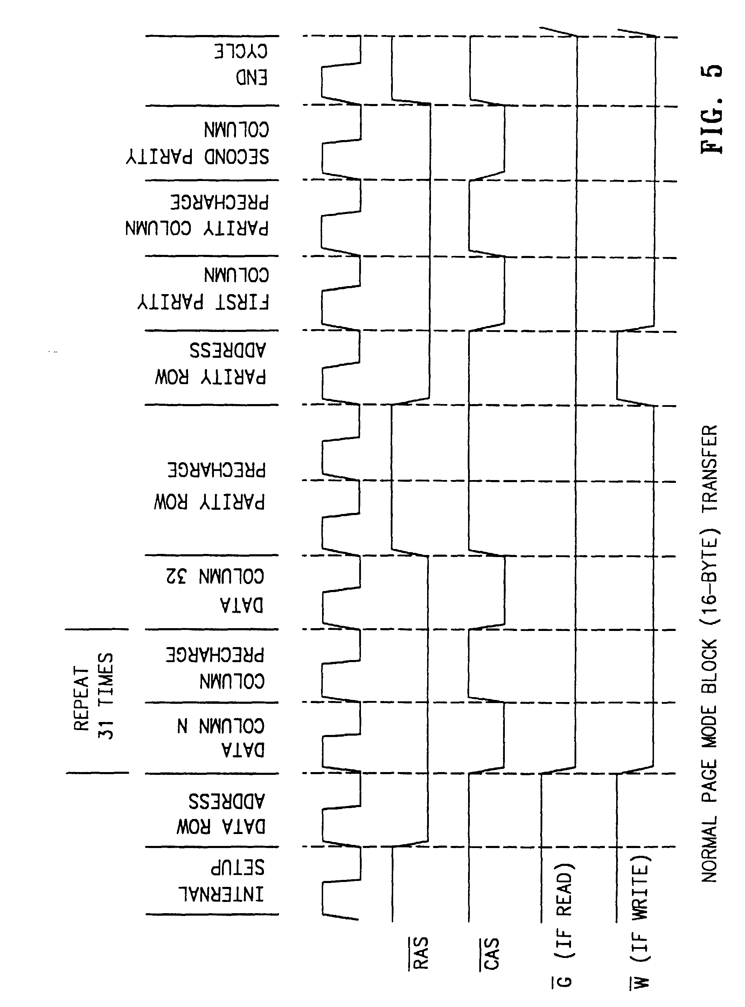

Figures 5, 6 and 7 show timing diagrams for various DRAM buffer memory configurations to and from which blocks of data are transferred between the memory control logic 12 and the DRAM buffer memory 130. The DRAM interface 100 operates on blocks of data, which are 16-bytes in length. All transfers of lesser amounts of data are padded by the control logic prior to the DRAM interface 100 receiving the blocks of information. The buffer control logic also calculates parity, which is two nibbles of longitudinal parity for thirty two nibbles of data. The DRAM interface 100 performs a remapping of the base address of the information to simplify the internal logic. However, parity is always placed in the top 1/16th of the address space of the DRAM buffer memory as seen from inside. Various sizes of DRAM buffer memory can be used and these sizes include: 32K, 64K, 128K and 256K. One 256K DRAM provides a 32K buffer memory. Two 256K DRAMs provide a 64K buffer memory. One 1M DRAM provides a 128K buffer memory. Two 1M DRAMs provide a 256K buffer memory.

The transfer sequence for a block of data to a normal page mode DRAM is shown in Figure 5. First, the row address is presented. Then thirty two columns of data are transferred. Then, the parity row address is presented followed by the parity information from the two parity columns. Note that if a single page mode DRAM is used, each column of information except the last is followed by a column pre-charge cycle.

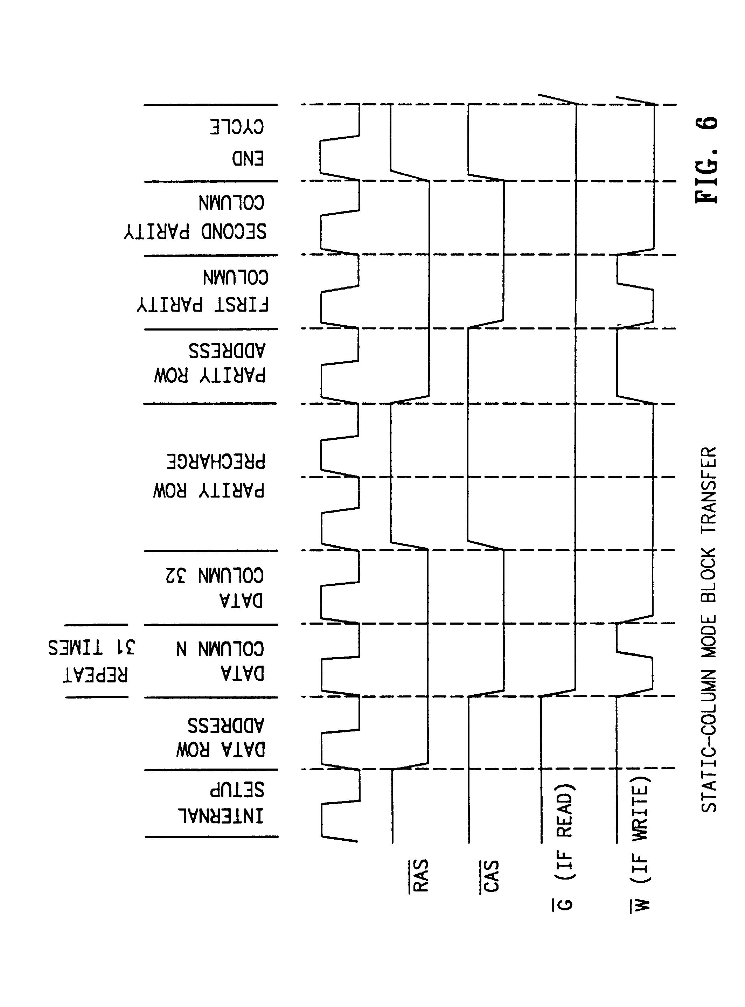

Figure 6 shows the timing signals for a single static-column mode DRAM. If a single static-column mode DRAM is used, the information from a column is transferred one after another with no intervening precharge cycle required. This greatly increases the speed of data transfer. If two DRAM memories are used, they are auto-matically alternated so that a pre-charge cycle for one DRAM occurs at the same time as the column cycle for the other. This results in the same speed as a static-column DRAM would give. Thus there is no advantage in using static-column DRAMs, which are more expensive, in a two RAM configuration. If it is necessary to use static-column DRAMs in a two RAM configuration, these memories can be used in a page mode of operation.

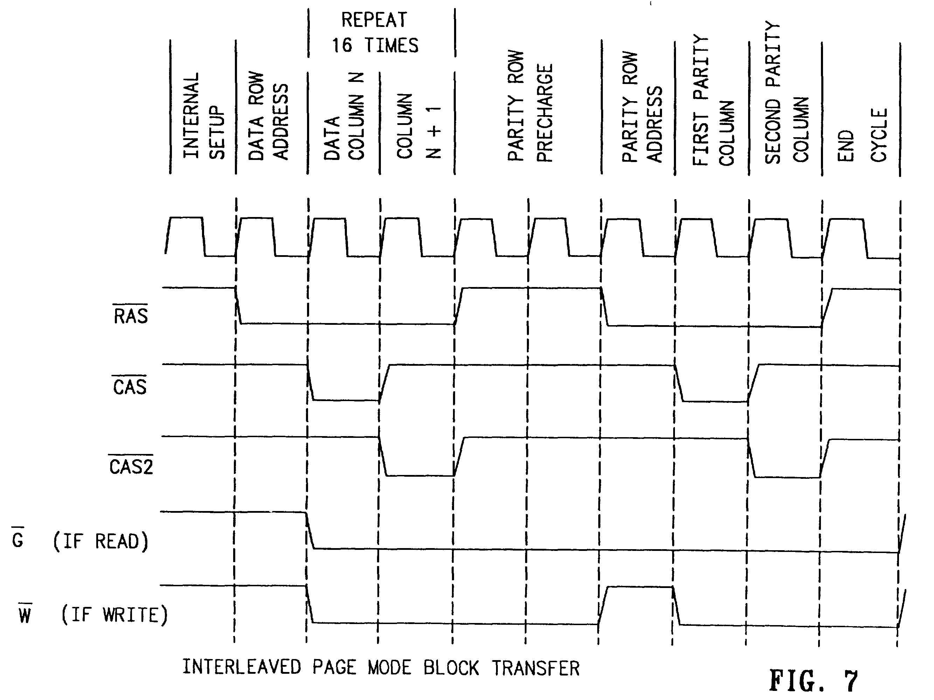

Figure 7 shows an inter-leaved page mode timing diagram.

From the timing diagrams, it can be seen that transfer of a single 16-byte block of information in a normal page mode of operation takes 72 cycles of the DRAM clock, while the same transfer in static-column or inter-leaved page mode is 40 cycles of the DRAM clock. With this information, the calculation of the required speed of a DRAM to achieve a buffer band width, as well as the speed of the clock, can be made. For a single page mode DRAM, the minimum cycle time required is equal to the column access time. While for a single static-column DRAM or two page mode DRAMs, the minimum cycle time is equal to the column access time plus an address control skew time. It is recommended that the nominal cycle time be set somewhat slower than the minimum cycle time to allow for speed variations due to voltage ripple on the DRAM power supplies. If a 32K buffer using a single Texas Instruments TMS4464-12 256K page mode DRAM is used, a 60 nS column access time is obtained. The clock is set for a cycle time greater than 61.8 nS. The worst case slow cycle time will be 63.8 nS for a total time of 4,594 nS to transfer a 16-byte block of information or a guaranteed band width of 3.48 megabytes/second. If two 256K page mode DRAMs are used, the clock is set to greater than 64.9 nS with a worst case slow time of 66.9 nS, taking 2,676 nS to transfer a block of information with a guaranteed band width of 5.98 megabytes. If a full 8-megabyte band width is required, a block of information must be transferred every 1,961 nS, allowing for refresh, and the worst case time will be 49 nS. This would require the use of a static-column DRAM or a pair of page mode DRAMS with a column access time less than 45.7 nS.

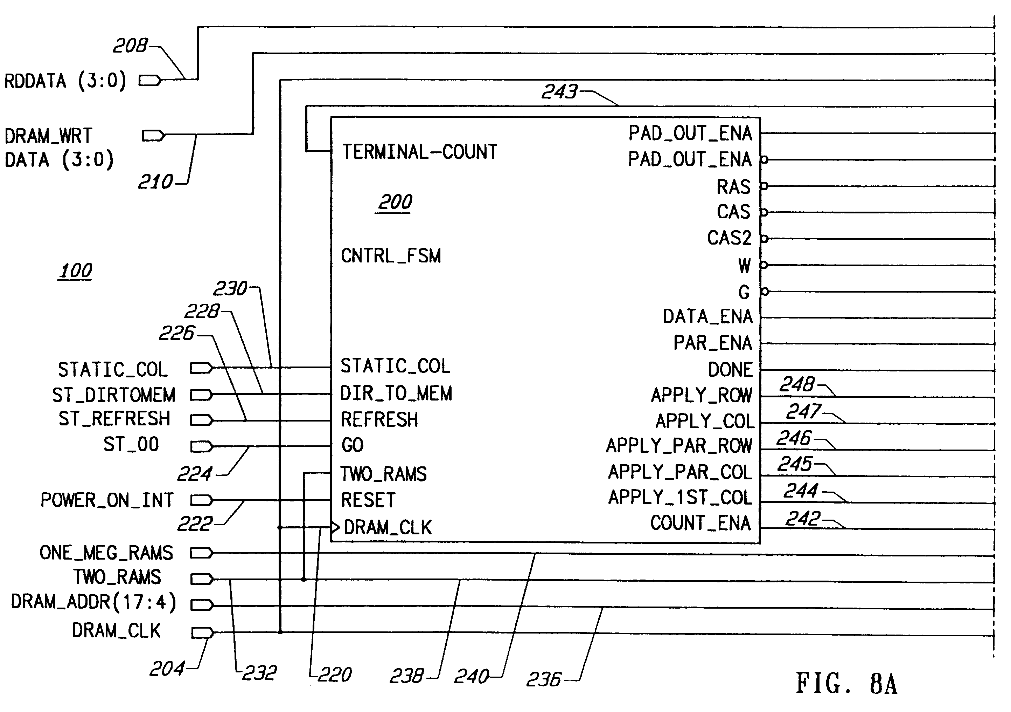

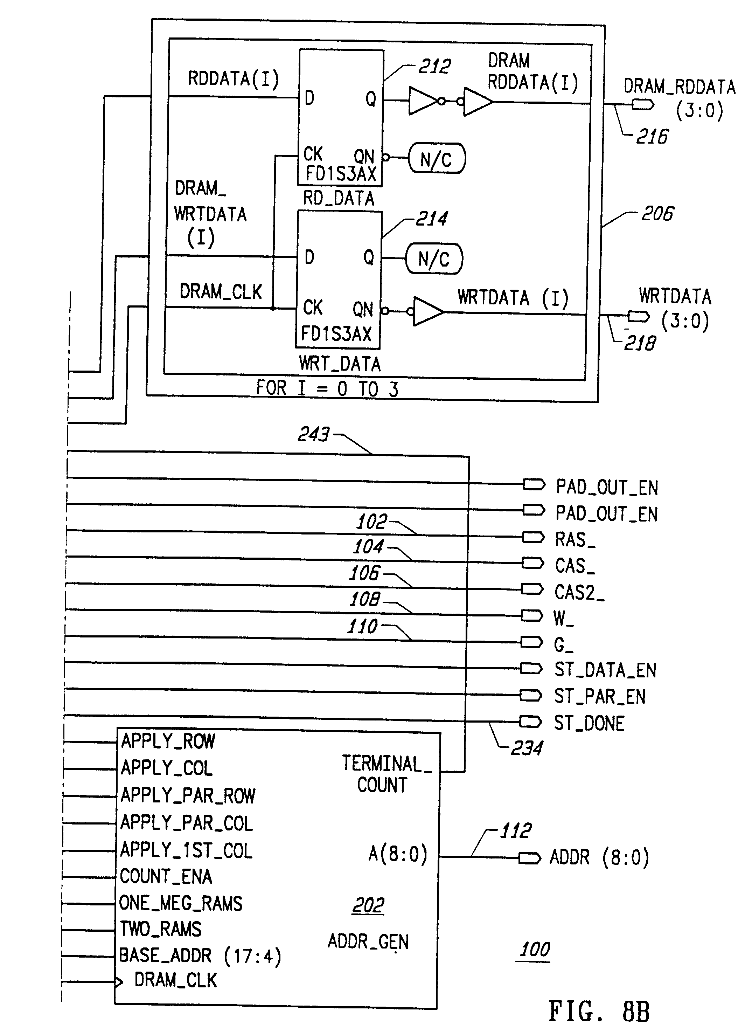

Figure 8 is a block diagram of a control logic circuit. It shows the main elements of the DRAM interface circuit 100 of Figure 1. The DRAM interface circuit 100 includes a control state machine (Control FSM) 200 and an address generator 202. The address generator 202 provides the address signals on a signal bus 112 to the DRAM buffer memory. A DRAM clock signal is provided at an input terminal 204. The DRAM clock signal is distributed to the control state machine 200, the address generator 202 and a block of four pairs of D flip flops, one of which is typically shown as reference numeral 206. Each pair of the D flip flops processes, respectively, one bit of four bits of read data, received on a signal bus 208, or write data, received on a signal bus 210. Each of the respective read data bits and write data bits are re-timed with the DRAM clock in respective D flip flops 212, 214. The block 206 shows the re-timing circuit for the ith bit. The re-timed read data is re-assembled in a data bus 216 and the re-timed write data is assembled in a data bus 218, as shown.

The control state machine 200 receives the DRAM clock on a signal line 220. A re-set signal is received on a signal line 222. A start signal is received on a signal line 224. A refresh command signal is received on a signal line 226. A signal indicating that a static column DRAM mode is being used is received on a signal line 230. A signal indicating that two DRAMs are to be used is received on a signal line 232. The control state machine 200 provides an inverted row address select signal RAS on the signal line 102; an inverted column address signal CAS on the signal line 104; a second column address signal CAS2 on the signal line 106; an inverted DRAM write strobe W on the signal line 108 and a DRAM output drive enable signal G on the signal line 110. When 16-bytes of information has been transferred a DONE signal is provided on a signal line 234.

The address generator 202, as previously mentioned, provides nine address bits on the signal bus 112 to the DRAM. The address generator includes a counter, which counts from the base address provided as an input to the address generator on a signal line 236. A signal indicating that two DRAMS are being used for buffer storage is provided on a signal line 238. A signal indicating whether one megabit RAMS are being used is provided on a signal line 240. The counters within the address generator 202 are enabled by a count enable signal provided from the control state machine 200 on a signal line 242. A signal is output from the address generator 202 on a signal line 243 to the control state machine 200 when a count of thirty two is reached in the address generator indicating that the end of a block of data has been reached.

Signals pass between the control state machine 200 and the address generator 202 on signal lines 242, 244, 245, 246, 247 and 248. These are steering and control signals for the multiplexer logic. A signal Apply_Row on line 248 steers the multiplexer to form the data row address. A signal Apply_Col on the line 247 tells it to form the data column address. A signal Apply_Par_Row on the line 246 forms the parity row address. A signal Apply_Par_Col on the line 245 forms the parity column address. A signal Apply_1st_Col on the line 244 says that this is the first column address of either the data or parity group, and causes the count bits to be set to zero. A signal Count Ena on the line 242 causes them to count. If the signal Apply_Col or Apply_Par_Col are true, and neither of the signals Apply_1st_Col nor Count_Ena are true, the count bits will be held as they are. If the signal Terminal-Count on the line 243 is the signal back to the control state machine 200 that the count sequence for the data bits is completed, and allows the control state machine 200 to move onto the states in which parity is written or read.

Functionally, the DRAM interface circuit shown in Figure 8 corresponds with the DRAM interface circuit 100 shown in Figure 1.

Ordinarily, to support a large number of different sizes of DRAMs, it would be required that a large number of addresses be multiplexed by a circuit such as the address generator 202. However, it is possible to fold the addresses required in such a way that the nubmer of address bits required to provide all of the addresses required for the memory for a given bit can effectively be reduced from nine to approximately four. Table 1 as shown below shows a conventional scheme for providing connections for fourteen bits of internal addresses, designated as IA14 to IA4 (as provided on the signal bus 236) to the DRAM address lines designated A8 to A0 (provided on the address bus 112) to the DRAM.

Table 1 is shown for two DRAM buffer memory sizes. The first is a 32K DRAM buffer memory size, which is implemented with a 4 x 64K DRAM. The second is a 64K DRAM buffer memory size, which is implemented by two 4 x 64K DRAMs. For each of these cases, various ones of the bit lines for the internal addresses are connected to the DRAM address bit lines through multiplexers. For example, with reference to the timing diagram of Figure 6, the internal addresses for the data row are provided in the first line of the Table, that is in the ROW line. DRAM address line A7 receives the internal address line 14. DRAM address line A6 receives the internal address line 13.
DRAM address line A5 receives the internal address line 12 etc. The addresses for the data columns are provided as thirty two different column addresses in the COLUMN line of Table 1. DRAM address bits A4 to A0 are provided by counter bits CNT4 to CNTO, which are the output bits of an internal counter. The third row in Table 1 contains the parity row addresses and the fourth row in Table 1 contains the parity column addresses. For the first example of Table 1, thirty-five addresses are provided to the DRAM to access a row, thirty two columns and a parity row and column. Similarly, the second example of Table 1 shows the address multiplexing required for a 64K DRAM buffer memory.

**TABLE 1**

| A8 | A7 | A6 | A5 | A4 | A3 | A2 | A1 | A0 |
|---|---|---|---|---|---|---|---|---|
| 32K (4x64K DRAM) | | | | | | | | |
| ROW | IA14 | IA13 | IA12 | IA11 | IA10 | IA9 | IA8 | IA7 |
| COLUMN | IA6 | IA5 | IA4 | Cnt4 | Cnt3 | Cnt2 | Cntl | Cnt0 |
| PR | 1 | 1 | 1 | | IA14 | IA13 | IA12 | IA11 |
| PC | IA10 | IA9 | IA8 | IA7 | IA6 | IA5 | IA4 | IA0 |

| 64k (Two 4X64k DRAMs) | | | | | | | | |
|---|---|---|---|---|---|---|---|---|
| ROW | IA15 | IA14 | IA13 | IA12 | IA11 | IA10 | IA9 | IA8 |
| COLUMN | IA7 | IA6 | IA5 | IA4 | Cnt3 | Cnt2 | Cnt1 | Cnt0 |
| PR | 1 | 1 | 1 | 1 | IA15 | IA14 | IA13 | IA12 |
| PC | IA11 | IA10 | IA9 | IA8 | IA7 | IA6 | IA5 | IA4 |

Note that for Table 1, in order to accommodate two different memory configurations, eight different internal address lines are typically required to be changed. These changes are accomplished by multiplexing the appropriate internal address line and counter output lines to selected DRAM address lines.

Table 2 shows how the logic according to the invention maps internal addresses and counters to the DRAM address lines for four different memory configurations. Note that the notation IAn refers to the internal address, assuming that this information is presented as bits 17:4, where the nomenclature "bits 17:4" indicates the range of bits starting from the most significant bit 17 to the least significant bit 4. CNTN refers to the nibble count having five output bits (See Table 2, Cntn=0 to Cntn = 4) which are able to represent thirty-two distinct column addresses, for example, from column addresses one to thirty-two. If two DRAMS are used, only four bits of nibble count are used. Comparison of the first two examples of Table 2 with the examples of Table 1 shows that for Table 1 the DRAM bit line A7 has seven different internal bit lines multiplexed into it. For the first two examples of Table 2, the bit line A7 has only three internal bit lines multiplexed into it. Thus, Table 2 requires a smaller set of internal address multiplexers to map the internal addresses to the DRAM address bits. This provides a significant reduction in circuit complexity.

**TABLE 2**

| (1) 4 x 64K DRAM | | | | | | | | | |
|---|---|---|---|---|---|---|---|---|---|
| 32K: | A8 | A7 | A6 | A5 | A4 | A3 | A2 | A1 | A0 |
| Row | (X) | IA8 | IA7 | IA14 | IA13 | IA12 | IA11 | IA10 | IA9 |
| Column | (X) | Cnt0 | Cnt4 | Cnt3 | Cnt2 | Cnt1 | IA6 | IA5 | IA4 |
| Parity | | | | | | | | | |
| Row | (X) | IA8 | IA6 | 1 | 1 | 1 | 1 | IA5 | IA4 |
| Parity | | | | | | | | | |
| Column | (X) | Cnt0 | IA7 | IA14 | IA13 | IA12 | IA11 | IA10 | IA9 |

| (2) 4 x 64K DRAMS | | | | | | | | | |
|---|---|---|---|---|---|---|---|---|---|
| 64K: | A8 | A7 | A6 | A5 | A4 | A3 | A2 | A1 | A0 |
| Row | (X) | IA8 | IA15 | IA14 | IA13 | IA12 | IA11 | IA10 | IA9 |
| Column | (X) | IA7 | Cnt4 | Cnt3 | Cnt2 | Cntl | IA6 | IA5 | IA4 |
| Parity | | | | | | | | | |
| Row | (X) | IA7 | 1 | 1 | 1 | 1 | IA6 | IA5 | IA4 |
| Parity | | | | | | | | | |
| Column | (X) | IA8 | IA15 | IA14 | IA13 | IA12 | IA11 | IA10 | IA9 |

| (1) 4 x 256K DRAMS | | | | | | | | | |
|---|---|---|---|---|---|---|---|---|---|
| 128K: | A8 | A7 | A6 | A5 | A4 | A3 | A2 | A1 | A0 |
| Row | IA8 | IA16 | IA15 | IA14 | IA13 | IA12 | IA11 | IA10 | IA9 |
| Column | Cnt0 | IA7 | Cnt4 | Cnt3 | Cnt2 | Cntl | IA6 | IA5 | IA4 |
| Parity | | | | | | | | | |
| Row | IA8 | 1 | 1 | 1 | 1 | IA7 | IA6 | IA5 | IA4 |
| Parity | | | | | | | | | |
| Column | Cnt0 | IA16 | IA15 | IA14 | IA13 | IA12 | IA11 | IA10 | IA9 |

| (2) 4 x 256K DRAMS) | | | | | | | | | |
|---|---|---|---|---|---|---|---|---|---|
| 256K: | A8 | A7 | A6 | A5 | A4 | A3 | A2 | A1 | A0 |
| Row | IA17 | IA16 | IA15 | IA14 | IA13 | IA12 | IA11 | IA10 | IA9 |
| Column | IA8 | IA7 | Cnt4 | Cnt3 | Cnt2 | Cnt1 | IA6 | IA5 | IA4 |
| Parity Row | 1 | 1 | 1 | 1 | IA8 | IA7 | IA6 | IA5 | IA4 |
| Parity | | | | | | | | | |
| Column | IA17 | IA16 | IA15 | IA14 | IA13 | IA12 | IA11 | IA10 | IA9 |

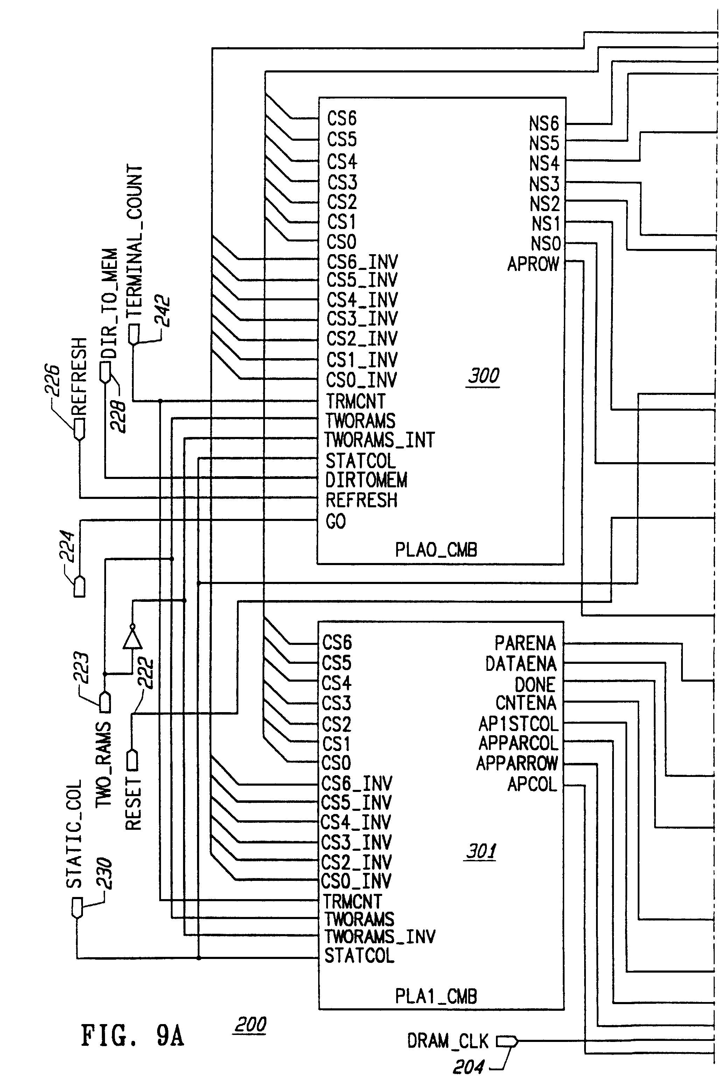

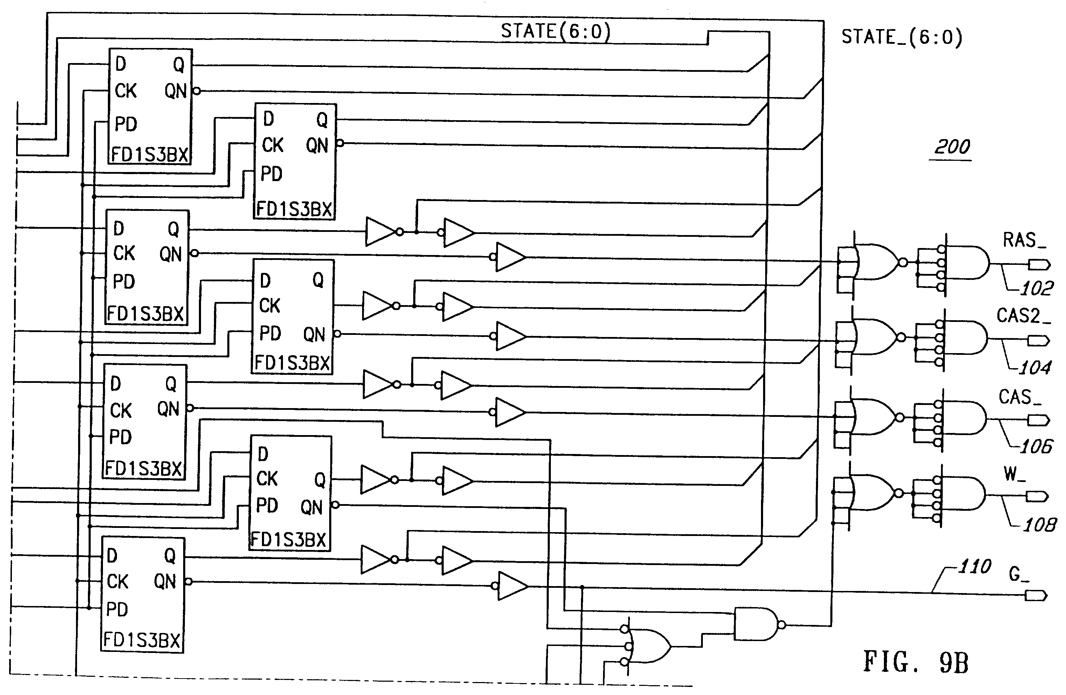

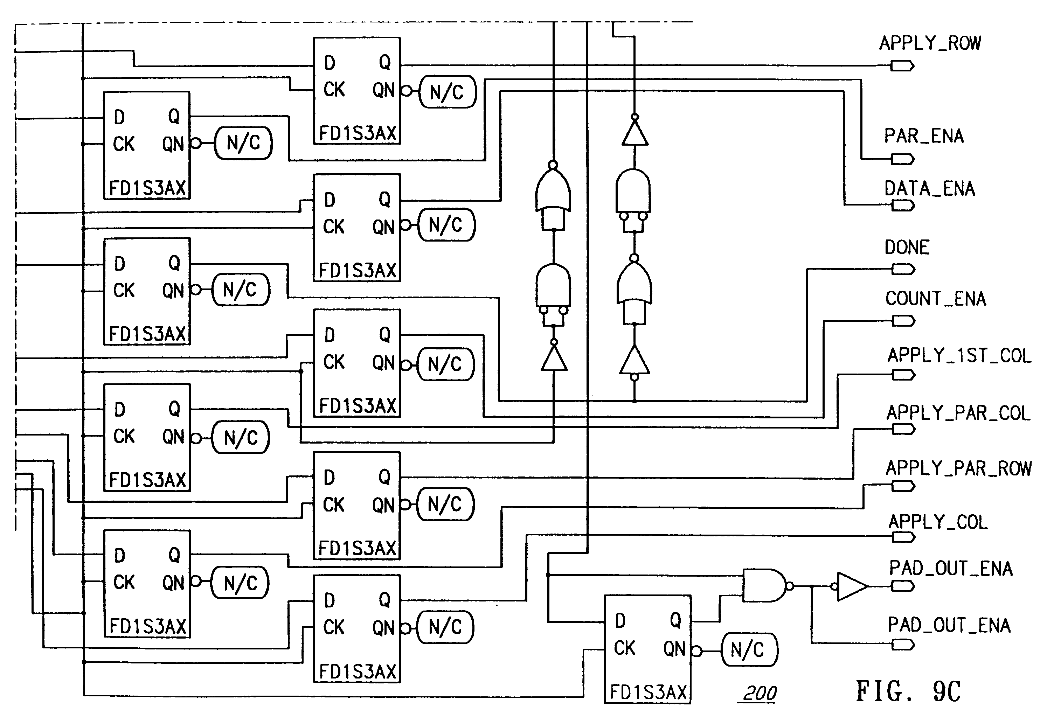

Figure 9 is a more detailed block diagram of a control state machine 200, shown in Figure 8. The control state machine 200 includes a first program logic array (PLA0) 300 and a second program logic array (PLA1) 301, which provide combinatorial logic for combining the various input signals to the control state machine 200 to provide logic output signals. The DRAM clock at the terminal 204 clocks a number of D flip flops to latch the combinatorial outputs of the program logic arrays 300, 301. Various other logic elements are provided at the output terminals of the various D flip flops to provide the output signals at the various terminals, as indicated in the drawings.

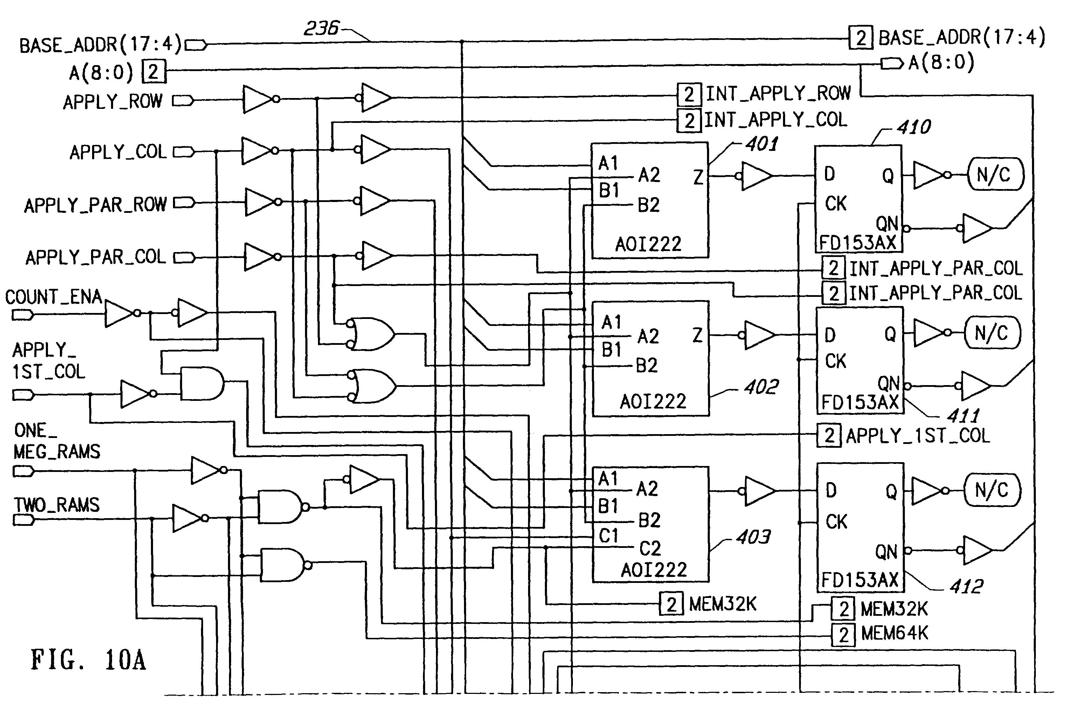

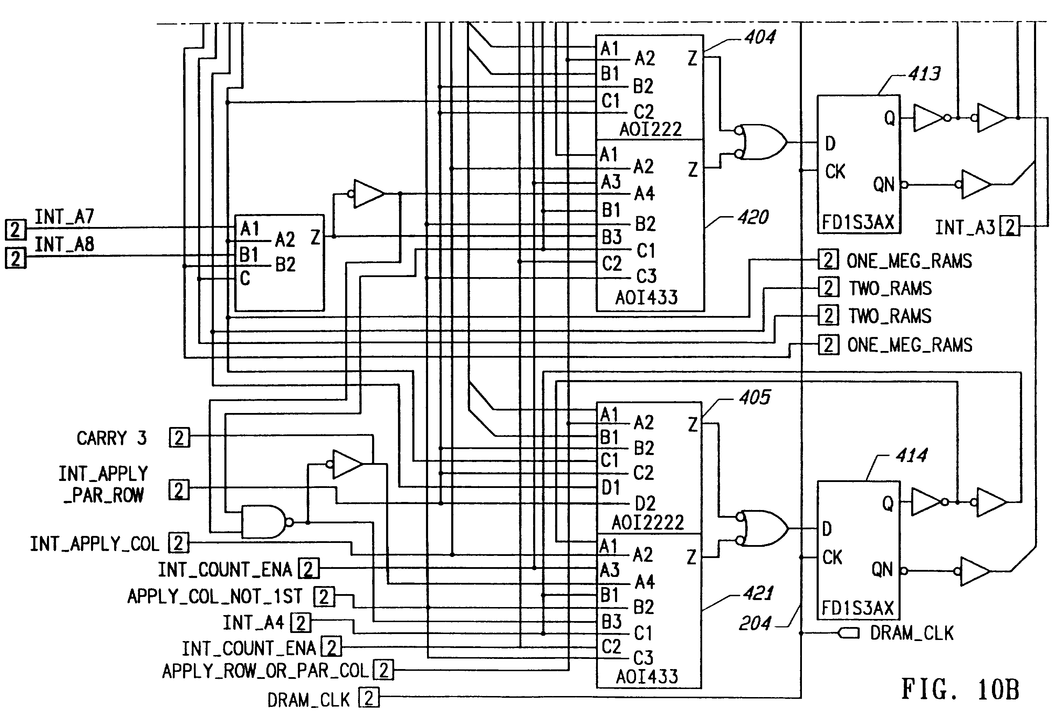

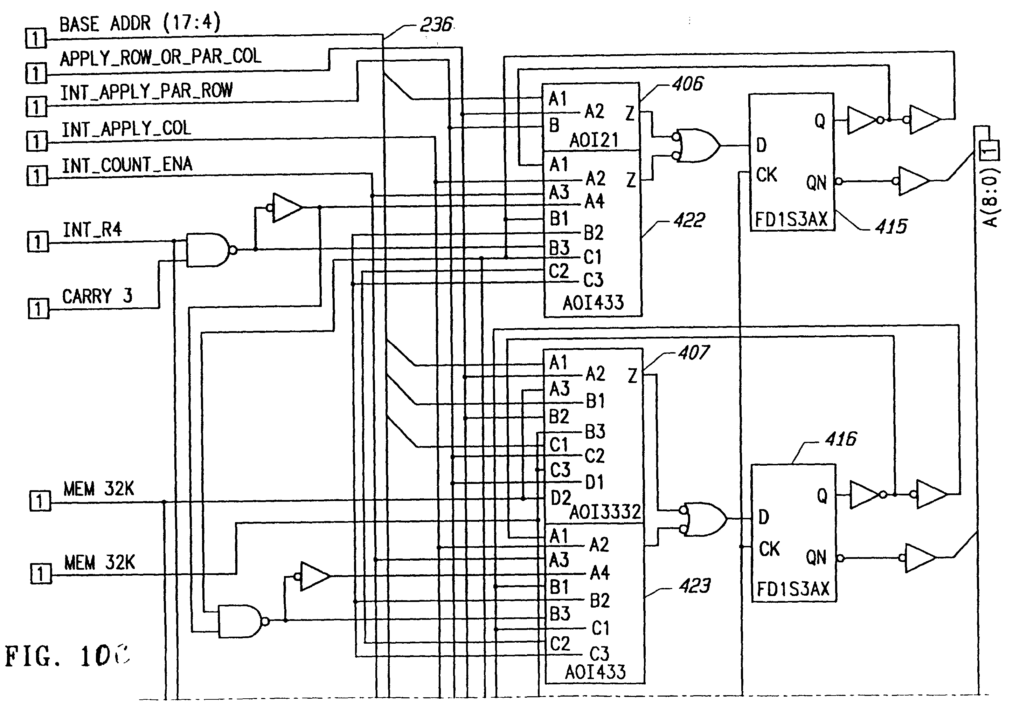

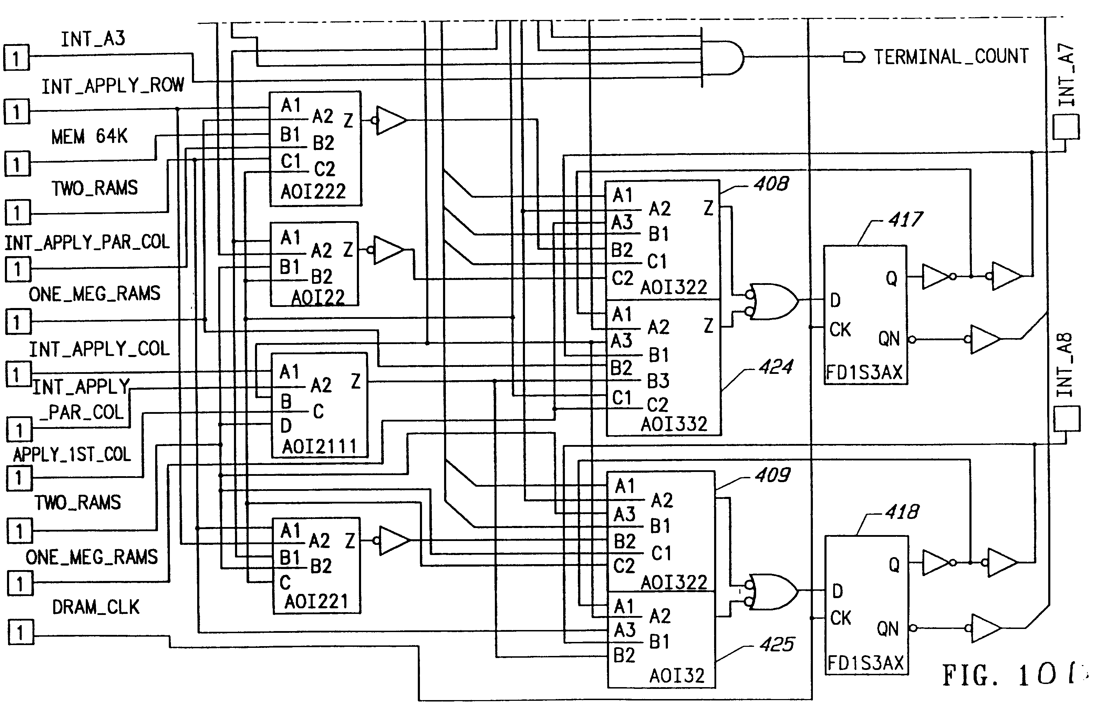

Figure 10 shows the circuit details for the address generator 202 shown in Figure 8. Essentially, these circuits implement the connection arrangement of Table 2. The internal address signals provided on the bus 236 are distributed on that bus to various and/or/invert stages, which function as multiplexers 401 to 409 for selection of these address lines in accordance with the internal logic provided by the control state machine 200 and various other logic elements as shown in Figure 10A and 10B. Each of these multiplexers 401 to 409 has its output signal coupled to the D input terminals of a respective D flip flop 410 to 418, which latch the output signals of these multiplexers under control of the DRAM clock provided at the terminal 204. The various column count signals CNTN as indicated in Table 2 are provided by output signals from certain of the D flip flops 413 to 418 being coupled through multiplexers 420 to 425 and latched into the inputs of the D flip flops 413 to 418.

Note that all of the logic elements shown in the drawings are standard cells and building blocks provided by the ATNT 1.25 micron CMOS cell library.

## Claims

1. A method for temporarily storing and retrieving q-bit character information data for an information storage system in a y-bit wide buffer memory unit comprising a plurality of DRAMS, with q being greater than y, characterised by:
providing a virtual memory address for each item of q-bit character information data, said character information data being organised into a block comprising z said information characters;
translating the virtual memory addresses into corresponding addresses of memory locations in said buffer memory unit for storage of y-bit groups of said block in said buffer memory unit, said translating step including
selecting a row address for storage of said block,
selecting a base column address for said block, and
successively incrementing said base column address to provide additional column addresses for successive y-bit groups of said block;
transferring each of said y-bit groups of said block via a y-bit data bus to an address location in said buffer memory unit determined by said translating step;
providing a x-bit error detection code word for each said block;
selecting an address for storing said x-bit error detection code word in said buffer memory unit; said selecting an address including:
selecting an error detection code word row address;
selecting an error detection code word base column address for a first y-bit group of said x-bit error detection code word;
incrementing said error detection code word base column address by y to provide a second column address for a second y-bit group of said x-bit error detection code word; and
transferring said error detection code word via said y-bit data bus to the selected address locations for said x-bit error detection code word in said buffer memory unit.

2. A memory as claimed in claim 1, in which said error detection code words are stored in a first substantially contiguous address space in said buffer memory unit, and said character information data items are stored in a second substantially contiguous address space in said buffer memory unit separate from said first address space, said error detection code words being stored separately from the character information data to which they pertain.

3. A method as claimed in either claim 1 or 2, in which translating the virtual memory address includes selecting the row and column address using multiplexer circuits.

4. A method as claimed in any one of claims 1 to 3, further comprising latching the row and column addresses into latch circuits, and wherein successively incrementing said base column address includes coupling outputs from the latch circuits via multiplexing circuits coupled to the inputs of the latch circuits.

5. A method as claimed in any one of claims 1 to 4, in which the buffer memory unit comprises a DRAM operating in a page mode.

6. A method as claimed in any one of claims 1 to 4, in which the buffer memory unit comprises a DRAM operating in a static column mode.

7. A method as claimed in any one of claims 1 to 6, in which transferring said error detection code word includes forming an address for each provided said error detection code word from said base address of said block of data by right-shifting said base address of said block of data by a pre-determined number of bits and filling the thus-vacated upper bit positions with a fixed bit pattern.

8. A method as claimed in any one of the preceding claims, in which q is 8, x is 8, y is 4 and z is 16.

9. A method as claimed in any one of the preceding claims, in which said information storage system includes a magnetic disk.

10. A method for temporarily storing and retrieving q-bit character information data for an information storage system in a y-bit wide buffer memory unit comprising a plurality of DRAMS, with q being greater than y, characterised by:
providing a virtual memory address for each item of q-bit character information data, said character information data being organised into a block comprising z said information characters;
translating the virtual memory addresses into corresponding addresses of memory locations in said buffer memory unit for storage of y-bit groups of said block in said buffer memory unit, said translating step including
selecting a row address for storage of said block,
selecting a base column address for said block,
latching said row and base column addresses into latch circuits, and
successively incrementing said base column address to provide additional column addresses for successive y-bit groups of said block by coupling outputs of said latch circuits via multiplexing circuits coupled to inputs of said latch circuits to increment said column addresses; and
transferring each of said y-bit groups of said block via a y-bit data bus to an address location in said buffer memory unit determined by said translating step.

11. A method as claimed in claim 10, further comprising:
providing a x-bit error detection code word for each said block;
selecting an address for storing said x-bit error detection code word in said buffer memory unit; said selecting an address including:
selecting an error detection code word row address;
selecting an error detection code word base column address for a first y-bit group of said x-bit error detection code word;
incrementing said error detection code word base column address by y to provide a second column address for a second y-bit group of said x-bit error detection code word; and
transferring said error detection code word via said y-bit data bus to the selected address locations for said x-bit error detection code word in said buffer memory unit.

12. A method as claimed in any one of the preceding claims, in which successively incrementing said base column address to provide additional column addresses for successive y-bit groups of said block comprises successively incrementing said base column address by y to provide additional column addresses for successive y-bit groups of said block.

13. A method as claimed in any one of claims 10, 11 and 12 when dependent upon claim 11, in which selecting an error detection code word row address comprises: selecting an error detection code word row address different from said row address selected for storage of said block; and selecting an error detection code word comprises selecting an error detection code word base column address for a first y-bit group of said x-bit error detection code word different from said selected block base column address; said character information being stored substantially contiguously in said buffer memory unit; and said error detection code words being stored substantially contiguously in said buffer memory unit and separate from said character information data to which said error detection code words pertain.

14. A method as claimed in any one of claims 1 to 13, in which said q-bit character information consists of 8-bit character information data, said character information being organised into 16-byte blocks, said y-bit wide buffer memory consists of 4-bit wide DRAM, and said x-bit error detection code word consists of an 8-bit code word.

## Patentansprüche

1. Verfahren zur vorübergehenden Speicherung und Rückgewinnung von q-Bit-Zeicheninformationsdaten für ein Informationsspeichersystem in einer y-Bit-breiten Pufferspeichereinheit, die eine Vielzahl von DRAM-Bausteinen aufweist, wobei q größer als y ist,
gekennzeichnet durch die folgenden Schritte:
Schaffung einer virtuellen Speicheradresse für jede Einheit von q-Bit-Zeicheninformationsdaten, wobei die Zeicheninformationsdaten in einem Block organisiert sind, der z derartige Informationszeichen umfaßt,
Umsetzen der virtuellen Speicheradressen in entsprechende Adressen von Speicherplätzen in der Pufferspeichereinheit zur Speicherung von y-Bit-Gruppen des Blockes in der Pufferspeichereinheit, wobei der Umsetzungsschritt:
das Auswählen einer Reihenadresse für die Speicherung des Blockes,
die Auswahl einer Basis-Spaltenadresse für den Block, und
die aufeinanderfolgende Weiterschaltung der Basis-Spaltenadresse zur Schaffung zusätzlicher Spaltenadressen für aufeinanderfolgende y-Bit-Gruppen des Blockes einschließt,
Übertragen jeder der y-Bit-Gruppen des Blockes über einen y-Bit-Datenbus zu einem Adressenplatz in der Pufferspeichereinheit, der durch den Umsetzungsschritt bestimmt ist,
Schaffung eines x-Bit-Fehlerdetektions-Codewortes für jeden derartigen Block;
Auswählen einer Adresse zur Speicherung des x-Bit-Fehlerdetektions-Codewortes in der Pufferspeichereinheit, wobei dieses Auswählen einer Adresse:
das Auswählen einer Fehlerdetektions-Codewort-Reihenadresse,
das Auswählen einer Fehlerdetektions-Codewort-Basis-Spaltenadresse für eine erste y-Bit-Gruppe des x-Bit-Fehlerdetektions-Codewortes,
das Weiterschalten der Fehlerdetektions-Codewort-Basis-Spaltenadresse um y zur Schaffung einer zweiten Spaltenadresse für eine zweite y-Gruppe des x-Bit-Fehlerdetektions-Codewortes einschließt, und
Übertragen des Fehlerdetektions-Codewortes über den y-Bit-Datenbus an die ausgewählten Adressenplätze für das x-Bit-Fehlerdetektions-Codewort in der Pufferspeichereinheit.

2. Speicher nach Anspruch 1,
bei dem die Fehlerdetektions-Codeworte in einem ersten im wesentlichen zusammenhängenden Adressenraum in der Pufferspeichereinheit gespeichert werden und die Zeicheninformationsdaten-Einheiten in einem zweiten, im wesentlichen zusammenhängenden Adressenraum in der Pufferspeichereinheit gespeichert werden, der von dem ersten Adressenraum getrennt ist, wobei die Fehlerdetektions-Codeworte getrennt von den Zeicheninformationsdaten gespeichert werden, auf die sie sich beziehen.

3. Verfahren nach Anspruch 1 oder 2,
bei dem die Umsetzung der virtuellen Speicheradresse die Auswahl der Reihen- und Spaltenadresse unter Verwendung von Multiplexerschaltungen einschließt.

4. Verfahren nach einem der Ansprüche 1 bis 3,
das weiterhin die Zwischenspeicherung der Reihen- und Spaltenadressen in Zwischenspeicherschaltungen umfaßt, und bei dem die aufeinanderfolgende Weiterschaltung der Basisspaltenadresse die Ankopplung von Ausgängen der Zwischenspeicherschaltungen über Multiplexerschaltungen einschließt, die mit den Eingängen der Zwischenspeicherschaltungen gekoppelt sind.

5. Verfahren nach einem der Ansprüche 1 bis 4,
bei dem die Pufferspeichereinheit einen DRAM umfaßt, der in einer Seitenbetriebsart arbeitet.

6. Verfahren nach einem der Ansprüche 1 bis 4,
bei dem die Pufferspeichereinheit einen DRAM umfaßt, der in einer statischen Spaltenbetriebsart arbeitet.

7. Verfahren nach einem der Ansprüche 1 bis 6,
bei dem die Übertragung des Fehlerdetektions-Codewortes die Bildung einer Adresse für jedes gelieferte der Fehlerdetektions-Codeworte aus der Basisadresse des Blockes von Daten durch Rechtsverschieben der Basisadresse des Blockes von Daten um eine vorgegebene Anzahl von Bits und durch Füllen der auf diese Weise freiwerdenden oberen Bitpositionen mit einem festen Bitmuster einschließt.

8. Verfahren nach einem der vorhergehenden Ansprüche, bei dem q gleich 8, x gleich 8, y gleich 4 und z gleich 16 ist.

9. Verfahren nach einem der vorhergehenden Ansprüche, bei dem das Informationsspeichersystem einen Magnetplatte einschließt.

10. Verfahren zur vorübergehenden Speicherung und Rückgewinnung von q-Bit-Zeicheninformationsdaten für ein Informations-speichersystem in einer y-Bit-breiten Pufferspeichereinheit, die eine Vielzahl von DRAM-Bausteinen aufweist, wobei q größer als y ist,
gekennzeichnet durch die folgenden Schritte:
Schaffung einer virtuellen Speicheradresse für jede Einheit der q-Bit-Zeicheninformationsdaten, wobei die Zeicheninformationsdaten in einem Block mit z derartigen Informationszeichen organisiert sind,
Umsetzen der virtuellen Speicheradressen in entsprechende Adressen von Speicherplätzen in der Pufferspeichereinheit zur Speicherung von y-Bit-Gruppen des Blockes in der Pufferspeichereinheit, wobei der Umsetzungsschritt:
das Auswählen einer Reihenadresse für die Speicherung des Blockes,
die Auswahl einer Basis-Spaltenadresse für den Block, die Zwischenspeicherung der Reihen- und Basis-Spaltenadressen in Zwischenspeicherschaltungen, und
das aufeinanderfolgende Weiterschalten der Basis-Spaltenadresse zur Schaffung zusätzlicher Spaltenadressen für aufeinanderfolgende y-Bit-Gruppen des Blockes durch Koppeln von Ausgängen der Zwischenspeicherschaltungen über Multiplexerschaltungen einschließt, die mit Eingängen der Zwischenspeicherschaltungen gekoppelt sind, um die Spaltenadressen weiterzuschalten, und
die Übertragung jeder der y-Bit-Gruppen des Blockes über einen y-Bit-Datenbus an einen Adressenplatz in der Pufferspeichereinheit, der durch den Umsetzungsschritt bestimmt ist.

11. Verfahren nach Anspruch 10,
das weiterhin folgende Schritte umfaßt:
Schaffen eines x-Bit-Fehlerdetektions-Codewortes für jeden der Blöcke,
Auswahl einer Adresse zur Speicherung des x-Bit-Fehlerdetektions-Codewortes in der Pufferspeichereinheit, wobei die Auswahl einer Adresse folgendes einschließt:
das Auswählen einer Fehlerdetektions-Codewort-Reihen-Adresse,
das Auswählen einer Fehlerdetektions-Codewort-Basis-Spaltenadresse für eine erste y-Bit-Gruppe des x-Bit-Fehlerdetektions-Codewortes,
das Weiterschalten der Fehlerdetektions-Codewort-Basis-Spaltenadresse um y zur Schaffung einer zweiten Spaltenadresse für eine zweite y-Bit-Gruppe des x-Bit-Fehlerdetektions-Codewortes, und
Übertragen des Fehlerdetektions-Codewortes über den y-Bit-Datenbus an die ausgewählten Adressenplätze für das x-Bit-Fehlerdetektions-Codewort in der Pufferspeichereinheit.

12. Verfahren nach einem der vorhergehenden Ansprüche,
bei dem die aufeinanderfolgende Weiterschaltung der Basis-Spaltenadresse zur Schaffung zusätzlicher Spaltenadressen für aufeinanderfolgende y-Bit-Gruppen des Blockes die aufeinanderfolgende Weiterschaltung der Basis-Spaltenadresse um y umfaßt, um zusätzliche Adressenspaltenadressen für aufeinanderfolgende y-Bit-Gruppen des Blockes zu schaffen.

13. Verfahren nach einem der Ansprüche 10, 11 und 12 unter Rückbeziehung auf Anspruch 11,
bei dem die Auswahl einer Fehlerdetektions-Codewort-Reihenadresse die Auswahl einer Fehlerdetektions-Codewort-Reihenadresse umfaßt, die von der für die Speicherung des Blockes ausgewählten Reihenadresse verschieden ist, und bei dem die Auswahl eines Fehlerdetektions-Codewortes die Auswahl einer Fehlerdetektions-Codewort-Basis-Spaltenadresse für eine erste y-Bit-Gruppe des x-Bit-Fehlerdetektions-Codewortes umfaßt, die von der ausgewählten Block-Basis-Spaltenadresse verschieden ist, wobei die Zeicheninformation im wesentlichen zusammenhängend in der Pufferspeichereinheit gespeichert wird, und wobei die Fehlerdetektions-Codeworte im wesentlichen zusammenhängend in der Pufferspeichereinheit und getrennt von den Zeicheninformationsdaten gespeichert werden, auf die sich die Fehlerdetektions-Codeworte beziehen.

14. Verfahren nach einem der Ansprüche 1 bis 13,
bei dem die q-Bit-Zeicheninformation aus 8-Bit-Zeicheninformationsdaten besteht, wobei die Zeicheninformation in 16-Byte-Blöcken organisiert ist, wobei der y-Bit-breite Pufferspeicher aus 4-Bit-breitem DRAM besteht, und wobei das x-Bit-Fehlerdetektions-Codewort aus einem 8-Bit-Codewort besteht.

## Revendications

1. Procédé de stockage temporaire et de récupération de données d'information de caractère de g bits pour un système de stockage d'informations dans une unité de mémoire tampon d'une capacité de y bits, comprenant une pluralité de mémoires DRAM, g étant supérieur à y, caractérisé par les étapes qui consistent à :
attribuer une adresse mémoire virtuelle à chaque article des données d'information de caractère de g bits, lesdites données d'information de caractère étant organisées en un bloc comprenant z desdits caractères d'information ;
traduire les adresses mémoire virtuelles en adresses de positions mémoire correspondantes dans ladite mémoire tampon, pour le stockage de groupes de y bits dudit bloc dans ladite unité de mémoire tampon, ladite étape de traduction comprenant les opérations qui consistent à :
sélectionner une adresse de rangée pour le stockage dudit bloc,
sélectionner une adresse de colonne de base pour ledit bloc, et
incrémenter ladite adresse de colonne de base de manière successive, pour fournir des adresses de colonne supplémentaires pour les groupes de y bits successifs dudit bloc ;
transférer chacun desdits groupes de y bits dudit bloc par l'intermédiaire d'un bus de données de y bits vers une position d'adresse dans ladite unité de mémoire tampon, déterminée par ladite étape de traduction ;
attribuer un mot de code de détection d'erreur de x bits à chacun desdits blocs ;
sélectionner une adresse pour le stockage dudit mot de code de détection d'erreur de x bits dans ladite unité de mémoire tampon ; ladite étape de sélection d'adresse comprenant les opérations qui consistent à :
sélectionner une adresse de rangée pour le mot de code de détection d'erreur ;
sélectionner une adresse de colonne de base pour le mot de code de détection d'erreur, pour un premier groupe de y bits dudit mot de code de détection d'erreur de x bits ;
incrémenter de y ladite adresse de colonne de base du mot de code de détection d'erreur, pour fournir une deuxième adresse de colonne pour un deuxième groupe de y bits dudit mot de code de détection d'erreur de x bits ; et
transférer ledit mot de code de détection d'erreur par l'intermédiaire dudit bus de données de y bits vers les positions d'adresse sélectionnées pour ledit mot de code de détection d'erreur de x bits dans ladite unité de mémoire tampon.

2. Procédé selon la revendication 1, dans lequel lesdits mots de code de détection d'erreur sont stockés dans un premier espace d'adresse essentiellement contigu dans ladite unité de mémoire tampon, et lesdits articles des données d'information de caractère sont stockés dans un deuxième espace d'adresse essentiellement contigu dans ladite unité de mémoire tampon, séparé dudit premier espace d'adresse, lesdits mots de code de détection d'erreur étant stockés séparément des données d'information de caractère auxquelles ils appartiennent.

3. Procédé selon la revendication 1 ou 2, dans lequel l'étape de traduction de l'adresse de mémoire virtuelle comprend l'opération consistant à sélectionner les adresses de rangée et de colonne à l'aide de circuits multiplexeurs.

4. Procédé selon l'une quelconque des revendications 1 à 3, comprenant en outre l'étape qui consiste à verrouiller les adresses de rangée et de colonne dans des circuits de verrouillage, et dans lequel l'étape d'incrémentation successive de ladite adresse de colonne de base comprend l'opération qui consiste à coupler des sorties des circuits de verrouillage par l'intermédiaire de circuits de multiplexage couplés aux entrées des circuits de verrouillage.

5. Procédé selon l'une quelconque des revendications 1 à 4, dans lequel l'unité de mémoire tampon comprend une mémoire DRAM fonctionnant en mode page par page.

6. Procédé selon l'une quelconque des revendications 1 à 4, dans lequel l'unité de mémoire tampon comprend une mémoire DRAM fonctionnant en mode colonne statique.

7. Procédé selon l'une quelconque des revendications 1 à 6, dans lequel l'étape de transfert dudit mot de code de détection d'erreur comprend les opérations consistant à former une adresse pour chacun desdits mots de code de détection d'erreur attribués, à partir de ladite adresse de base dudit bloc de données, en décalant ladite adresse de base dudit bloc de données vers la droite, d'un nombre prédéterminé de bits, et à remplir les positions binaires supérieures ainsi libérées avec un profil binaire fixe.

8. Procédé selon l'une quelconque des revendications précédentes, dans lequel g est égal à 8, x est égal à 8, y est égal à 4 et z est égal à 16.

9. Procédé selon l'une quelconque des revendications précédentes, dans lequel ledit système de stockage d'informations comprend un disque magnétique.

10. Procédé de stockage temporaire et de récupération de données d'information de caractère de g bits pour un système de stockage d'informations dans une unité de mémoire tampon d'une capacité de y bits, comprenant une pluralité de mémoires DRAM, g étant supérieur à y, caractérisé par les étapes qui consistent à :
attribuer une adresse mémoire virtuelle à chaque article des données d'information de caractère de g bits, lesdites données d'information de caractère étant organisées en un bloc comprenant z desdits caractères d'information ;
traduire les adresses mémoire virtuelles en adresses correspondantes de positions mémoire dans ladite mémoire tampon, pour le stockage de groupes de y bits dudit bloc dans ladite unité de mémoire tampons, ladite étape de traduction comprenant les opérations qui consistent à :
sélectionner une adresse de rangée pour le stockage dudit bloc,
sélectionner une adresse de colonne de base pour ledit bloc,
verrouiller lesdites adresses de rangée et de colonne de base dans des circuits de verrouillage, et
incrémenter de manière successive ladite adresse de colonne de base pour fournir des adresses de colonne supplémentaires pour les groupes de y bits successifs dudit bloc, en couplant des sorties desdits circuits de verrouillage par l'intermédiaire de circuits de multiplexage couplés aux entrées desdits circuits de verrouillage, pour incrémenter lesdites adresses de colonne ; et
transférer chacun desdits groupes de y bits dudit bloc par l'intermédiaire d'un bus de données de y bits vers une position d'adresse dans ladite unité de mémoire tampon, déterminée par ladite étape de traduction.

11. Procédé selon la revendication 10, comprenant en outre les étapes qui consistent à :
attribuer un mot de code de détection d'erreur de x bits à chacun desdits blocs ;
sélectionner une adresse pour le stockage dudit mot de code de détection d'erreur de x bits dans ladite unité de mémoire tampon ; ladite étape de sélection d'adresse comprenant les opérations qui consistent à :
sélectionner une adresse de rangée pour le mot de code de détection d'erreur ;
sélectionner une adresse de colonne de base pour le mot de code de détection d'erreur, pour un premier groupe de y bits dudit mot de code de détection d'erreur de x bits ;
incrémenter de y ladite adresse de colonne de base du mot de code de détection d'erreur, pour fournir une deuxième adresse de colonne pour un deuxième groupe de y bits dudit mot de code de détection d'erreur de x bits ; et
transférer ledit mot de code de détection d'erreur par l'intermédiaire dudit bus de données de y bits vers les positions d'adresse sélectionnées pour ledit mot de code de détection d'erreur de x bits dans ladite unité de mémoire tampon.

12. Procédé selon l'une quelconque des revendications précédentes, dans lequel l'étape d'incrémentation successive de ladite adresse de colonne de base pour fournir des adresses de colonnes supplémentaires pour les groupes de y bits successifs dudit bloc comprend l'opération consistant à incrémenter de manière successive de y ladite adresse de colonne de base pour fournir des adresses de colonne supplémentaires pour les groupes de y bits successifs dudit bloc.

13. Procédé selon l'une quelconque des revendications 10, 11 et 12 lorsqu'elle dépend de la revendication 11, dans lequel l'étape de sélection de l'adresse de rangée du mot de code de détection d'erreur comprend l'opération qui consiste à sélectionner pour le mot de code de détection d'erreur une adresse de rangée différente de ladite adresse de rangée choisie pour le stockage dudit bloc ; et l'étape de sélection d'un mot de code de détection d'erreur comprend l'opération qui consiste à sélectionner pour le mot de code de détection d'erreur, pour un premier groupe de y bits dudit mot de code de détection d'erreur de x bits, une adresse de colonne de base différente de ladite adresse de colonne de base choisie pour le bloc ; lesdites informations de caractère étant stockées d'une manière essentiellement contiguë dans ladite unité de mémoire tampon ; et lesdits mots de code de détection d'erreur étant stockés d'une manière essentiellement contiguë dans ladite unité de mémoire tampon et séparément desdites données d'information de caractère auxquelles lesdits mots de code de détection d'erreur appartiennent.

14. Procédé selon l'une quelconque des revendications 1 à 13, dans lequel lesdites informations de caractère de g bits consistent en des données d'information de caractère de 8 bits, lesdites informations de caractère étant organisées en blocs de 16 octets, ladite mémoire tampon d'une capacité de y bits est constituée d'une DRAM de 4 bits de capacité, et ledit mot de code de détection d'erreur de x bits consiste en un mot de code de 8 bits.
